# FASCICULE DE BREVET EUROPEEN

(11) **EP 1 525 164 B1**
(45) Date de publication et mention de la délivrance du brevet: **27.05.2009**
(21) Numéro de dépôt: 03758185.7
(22) Date de dépôt: 23.07.2003
(51) Int. Cl.: C02F 1/68

(54) **PROCEDE ET INSTALLATION POUR LA FABRICATION D'EAU DE CHAUX A PARTIR D'EAU DEIONISEE**
VERFAHREN UND VORRICHTUNG ZUR HERSTELLUNG VON KALKMILCH AUS DEIONISIERTEM WASSER
METHOD AND INSTALLATION FOR THE PRODUCTION OF LIME WATER FROM DEIONISED WATER

(30) Priorité: 26.07.2002 FR 0209574
(43) Date de publication de la demande: 27.04.2005
(73) Titulaire: OTV SA, 94417 Saint-Maurice Cédex (FR)
(72) Inventeur: CLAUSSE, Franck, 31850 Montrabe (FR); MARTEIL, Philippe, 95450 Vigny (FR); LEBOUC, Germain, F-35131 Chartres de Bretagne (FR); LEFORT, Frédéric, F-80202 PERONNE Cedex (FR)
(74) Mandataire: Larcher, Dominique
(86) Numéro de dépôt international: PCT/FR2003/002338
(87) Numéro de publication internationale: WO 2004/014807

(56) Documents cités:
- WO-A-01/96240

## Description

L'invention concerne le domaine du traitement de l'eau.

Plus précisément, l'invention concerne le domaine de la fabrication d'eau de chaux destinée à être utilisée pour reminéraliser les eaux ayant une faible minéralité et plus précisément les eaux ayant subi une étape de déionisation soit par filtration membranaire (de type osmose inverse, nanofiltration) soit par distillation, ou encore par passage sur résine échangeuse d'ions.

Ces eaux étant peu ou pas minéralisées, présentent l'inconvénient d'être corrosives et donc de pouvoir induire des dégradations des installations utilisées pour leur traitement ou leur transport.

De plus, ces eaux présentent une valeur de pH d'équilibre élevée au sens de l'équilibre calcocarbonique des eaux. Cette valeur élevée est incompatible avec une bonne efficacité de certains agents désinfectants, comme le chlore. II convient donc de les reminéraliser dans le but d'abaisser la valeur du pH d'équilibre.

Dans le processus de reminéralisation, il est connu d'ajouter à l'eau une base, et notamment de l'eau de chaux.

Compte tenu de la faible solubilité de la chaux dans l'eau, il est nécessaire d'utiliser des dispositifs spécifiques appelés «saturateurs » permettant d'obtenir une eau de chaux de titre constant autorisant un dosage précis.

Idéalement, on cherche ainsi à produire à l'aide de tels saturateurs une eau de chaux de qualité dont le titre est en pratique d'environ 220°F de TAC (titre alcalimétrique complet) à une température de 20°C soit 1,65 g/litre de Ca(OH)₂ avec une turbidité inférieure à 10 NTU. Grâce à sa limpidité, une telle eau de chaux sous forme de solution saturée peut être mélangée à l'eau à traiter pour reminéraliser efficacement celle-ci à l'aide de CO₂ gazeux.

Classiquement, les saturateurs reçoivent d'une part une certaine quantité de chaux sous forme de lait de chaux (de l'ordre de 20 à 100 g/litre), injecté à la base du saturateur ou dans une chambre de mélange interne ou externe au saturateur, et d'autre part de l'eau de dilution (eau à saturer par de la chaux). De l'eau additionnelle, appelée eau de giclage, permet d'ajuster le débit de production et améliore la qualité du mélange. La chaux est amenée sous forme liquide de lait de chaux et se trouve dissoute pendant son parcours ascensionnel dans le saturateur, générant une fraction de carbonates de calcium et autres particules insolubles, qui pourra être purgée de façon continue ou discontinue.

Classiquement, l'eau de dilution utilisée pour diluer le lait de chaux dans le saturateur est de l'eau minéralisée ou qui a subi un traitement de reminéralisation. Or, cette eau que nous appellerons par la suite « eau non déionisée », n'a subi qu'une simple filtration dite « non déionisante » soit par filtration granulaire sur sable soit parfois par microfiltration ou ultrafiltration, ce qui peut présenter l'inconvénient de ne pas retenir les molécules dissoutes ou indésirables comme les pesticides ou les nitrates. Lorsqu'elles sont intégrées à l'eau de chaux destinée à reminéraliser les eaux déionisées, ces eaux contribuent à la pollution de celles-ci dans une mesure certes faible mais néanmoins indésirable. Il est possible de débarrasser de telles eaux de leurs pesticides et/ou de leur nitrates par combinaison de moyens tels que le charbon actif et la dénitratation biologique ou sur résines, mais le moyen le plus simple est souvent d'utiliser directement l'eau déionisée produite par l'usine

Il a cependant été constaté que l'utilisation, à la place d'eau n'ayant subi qu'une filtration non déionisante, d'une eau déionisée ayant subi soit une filtration poussée sur membrane, soit une distillation ou une eau ayant subi un traitement avec des résines échangeuses d'ions, pour la fabrication de l'eau de chaux conduisait à l'obtention d'une eau de chaux qui se troublait rapidement du fait de la précipitation de carbonates provenant du CO₂ atmosphérique ou dissous. Une telle eau de chaux fabriquée ainsi à partir d'eau peu ou pas minéralisée présente en effet une turbidité pouvant être comprise classiquement entre 50 et 100 NTU. Une telle turbidité empêche son utilisation lors de l'étape de réminéralisation d'une eau ayant subi une filtration poussée sur membranes.

Un objectif de la présente invention est de proposer un nouveau procédé de fabrication d'eau de chaux à partir d'eau déionisée conduisant à une eau de chaux débarrassée de toute molécule indésirable du type pesticide ou nitrates et de manière générale de toute molécule non écartée par une filtration non-déionisante.

Un autre objectif de la présente invention est d'avoir des saturateurs à chaux de rendement supérieur aux saturateurs à chaux alimentés avec de l'eau filtrée. Les rendements des saturateurs se situent classiquement entre 75 et 95 %, c'est à dire que la perte en chaux peut atteindre 25%.

Un autre objectif de la présente invention est de présenter un tel procédé qui permette l'obtention d'une eau de chaux présentant une turbidité inférieure à 10 NTU pour un rendement du saturateur supérieur à 95 %.

Encore un autre objectif de la présente invention est de décrire un tel procédé qui puisse être mis en oeuvre dans un saturateur à chaux ne présentant que peu de modification par rapport au saturateur à chaux de l'art antérieur.

Ces différents objectifs sont atteints grâce à l'invention qui concerne un procédé de fabrication d'eau de chaux comprenant une étape de mélange de lait de chaux avec une eau de dilution, **caractérisé en ce que** ladite eau de dilution est une eau déionisée par filtration membranaire ou par distillation ou par passage sur résine échangeuse d'ions, et en ce qu'il comprend une étape préliminaire consistant à ajouter à ladite eau déionisée des ions silicates.

De façon surprenante, il a en effet été constaté que l'utilisation d'ions silicates permettait d'obtenir une eau de chaux présentant une turbidité faible avec un bon rendement de saturation. Par ailleurs, une telle utilisation en tant qu'eau de dilution d'eau ayant subi une déionisation, diminue considérablement la probabilité de retrouver des molécules indésirables dans l'eau reminéralisée grâce à l'eau de chaux obtenue par ce procédé.

L'utilisation d'un tel composé permet d'améliorer la floculation et la précipitation, d'où des vitesses au miroir améliorées, supérieures à 2 m/h.

On notera qu'on utilisera préférentiellement dans le cadre du procédé selon l'invention un silicate choisi dans le groupe constitué par le silicate de sodium et le silicate de potassium et que, de façon préférée entre toutes, on utilisera du silicate de sodium qui présente un coût de traitement moins élevé.

Comme indiqué ci-dessus, l'eau de dilution utilisée dans le cadre du procédé selon l'invention n'est pas de l'eau ayant subi une filtration grossière non-déionisante mais de l'eau ayant subi une filtration poussée sur membranes ou une distillation. Cette filtration poussée sur membranes pourra être une nanofiltration ou une filtration par osmose inverse.

On pourra envisager différents moyens pour ajouter les ions silicates à l'eau déionisée. Selon une variante, cette étape d'addition sera mise en oeuvre en mélangeant ce composé. Selon une autre variante, on introduira le silicate dans ledit saturateur.

Par ailleurs, on notera également que d'une façon préférentielle, le silicate sera ajouté à l'eau de dilution ou dans le saturateur à raison de 5 mg/l à 40 mg/l, préférentiellement 10 à 20 mg/l, de SiO₂ par rapport à l'eau de dilution.

Le procédé selon la présente invention peut-être mis en oeuvre dans toute installation comprenant :
- au moins un saturateur à chaux,
- des moyens d'amenée d'eau de dilution dans ledit saturateur à chaux,
- des moyens d'amenée de lait de chaux dans ledit saturateur à chaux,
- des moyens d'évacuation de l'eau de chaux obtenue par mise en contact du lait de chaux avec l'eau de dilution,
- des moyens d'évacuation des incuits et:ou précipités, et Zr-des moyens d'amenée d'ions silicates dans l'eau de dilution ou dans le saturateur à l'aide d'une conduite spécifique.

Préférentiellement, cette installation comprend également des moyens de mélange des ions silicates dans l'eau de dilution qui, conformément au procédé selon l'invention, est constituée par de l'eau dé ionisée ayant subi une filtration poussée sur membranes ou une distillation ou un traitement par passage sur résine échangeuse d'ions.

De façon préférée entre toutes, ces moyens de mélange permettant de diluer les ions silicates avec l'eau de dilution incluent au moins un système de mélange qui peut être un mélangeur statique ou une cuve de mélange.

Enfin, on notera que selon une variante l'installation inclut également des moyens de mesure de la qualité de l'eau de chaux fabriquée dans le saturateur et des moyens pour faire varier la dose de silicate amenée par les moyens d'amenée dans l'eau de dilution. De tels moyens de mesure peuvent par exemple comprendre un turbidimètre et/ou un pH-métre et/ ou des moyens de mesure de la conductivité.

De tels moyens permettent d'ajouter le silicate en quantité juste suffisante pour obtenir la qualité souhaitée de l'eau de chaux réalisée grâce à l'installation.

Le procédé selon la présente invention permet d'obtenir une eau de chaux présentant une turbidité inférieure à 10 NTU avec un rendement de saturation au moins égal à 95 % pouvant tout à fait être utilisée pour reminéraliser une eau ayant subi un processus par filtration membranaire ou de distillation ou par un traitement sur résine.

L'invention couvre également toute utilisation d'une eau de chaux obtenue grâce au procédé décrit ci-dessus dans le cadre d'un procédé de reminéralisation d'une eau à reminéraliser par addition d'eau de chaux et de gaz carbonique.

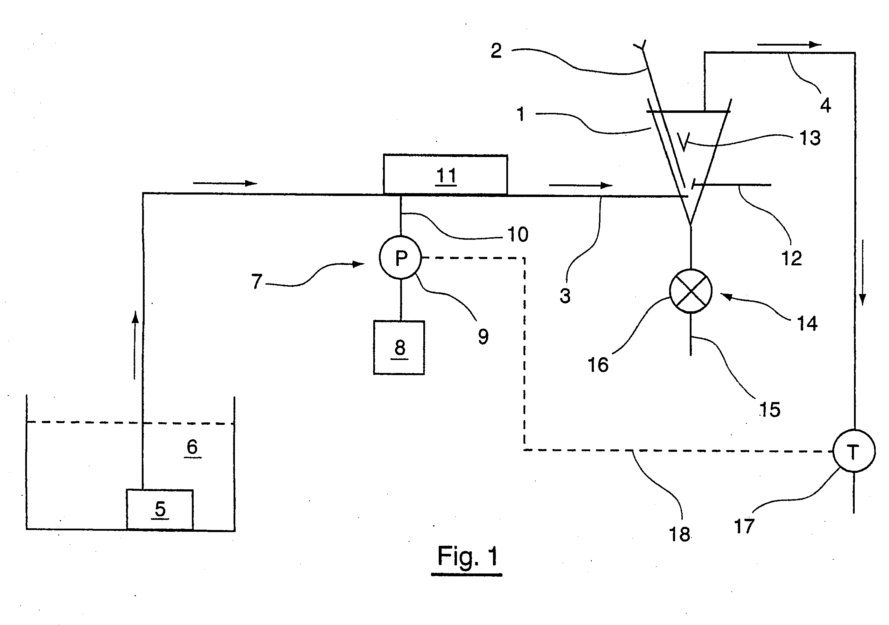

L'invention, ainsi que les différents avantages qu'elle présente seront mieux compris grâce à la description qui va suivre d'un mode non limitatif de réalisation de celle-ci en référence à la figure 1 qui représente une vue schématique d'une installation pour traiter une eau ayant subi un processus de filtration membranaire.

Selon la figure 1, l'installation comprend un saturateur à chaux 1, des moyens d'amenée 2 de lait de chaux dans ledit saturateur à chaux 1, des moyens d'amenée 3 d'eau de dilution dans le saturateur à chaux, des moyens d'évacuation 4 de l'eau de chaux obtenue par mise en contact du lait de chaux avec l'eau de dilution dans le saturateur à chaux 1. On notera que d'une façon classique, le saturateur à chaux 1 comprend aussi une arrivée d'eau de giclage 12 injectant de l'eau permettant de favoriser le mélange entre le lait de chaux et l'eau de dilution. Ce saturateur à chaux est également pourvu d'un piège à carbonates et insolubles 13 permettant d'évacuer les carbonates formés dans le saturateur à chaux, et de moyens d'évacuation 14 des boues formées dans la partie inférieure du saturateur incluant une canalisation d'évacuation 15 et une pompe 16.

Conformément à la présente invention, l'eau de dilution est constituée par de l'eau ayant subi une filtration poussée sur membrane, dans le cas présent de l'eau nano-filtrée pompée par une pompe 5 dans un réservoir d'eau nano-filtée 6.

L'installation inclut des moyens d'amenée 7 d'ions silicates dans l'eau de dilution. Ces moyens d'amenée incluent un réservoir de silicate 8, une pompe 9 et une canalisation 10.

Egalement, conformément à la présente invention, les ions silicates sont mélangés à l'eau de dilution grâce par exemple à un mélangeur statique 11, avant que ce mélange ne soit introduit dans le saturateur à chaux 1. Dans le cadre du présent mode de réalisation, on a utilisé un mélangeur statique 11.

Un turbidimètre 17 est prévu sur les moyens d'évacuation 4 de l'eau de chaux formée dans le saturateur à chaux 1 ainsi que des moyens 18 pour faire varier la dose de silicate amenée par les moyens d'amenée 7 de ce composé dans l'eau de dilution.

La présente installation a été testée en utilisation du silicate de potassium et du silicate de sodium. La concentration en silice, la densité et la consistance de ces réactifs sont présentés dans le tableau 1 ci-après.

**Tableau 1**

| Silicate | Concentration en SiO2 | Densité |
|---|---|---|
| de sodium | 25 | 1,36 |
| de potassium | 22,6 | 1,29 |

Le titre alcalimétrique complet (TAC) de l'eau de chaux réalisée selon l'invention a été mesuré et comparé au TAC de l'eau de chaux obtenue de façon classique en utilisant pour la fabrication de l'eau de chaux non pas de l'eau de dilution constituée par de l'eau ayant subi une filtration sur membranes mais une eau ayant subi une filtration non déionisante comme une filtration granulaire sur sable.

Le taux de recouvrement du TAC de l'eau de chaux obtenue selon la présente invention vis-à-vis du TAC de l'eau de chaux selon l'état de l'art a été mesuré. La turbidité à l'équilibre de l'eau de chaux obtenue a également été mesurée.

En ce qui concerne le silicate de potassium, des essais de production d'eau de chaux avec des ajouts de 0 , 5 , 6 et 20 mg/l de SiO₂ ont été effectués.

En ce qui concerne le silicate de sodium des essais de production d'eau de chaux avec des ajouts de 0 , 3 , 9 et 32 mg/l de SiO₂ ont été effectués.

Les tableaux 2 et 3 suivant présentent respectivement les résultats obtenus avec le silicate de potassium et le silicate de sodium avec de l'eau de dilution déionisée.

**Tableau 2**

| Taux de silicate de potassium (en ppm de SiO2) | Turbidité à l'équilibre (NTU) | Taux de recouvrement du TAC vis à vis du TAC obtenu selon l'art antérieur (en %) |
|---|---|---|
| 0 | >50 | / |
| 5 | 9 | 95-100 |
| 6 | 7 | 95 à 100 |
| 20 | 5 | 95 à 100 |

**Tableau 3**

| Taux de silicate de sodium (en ppm de SiO2) | Turbidité à l'équilibre (NTU) | Taux de recouvrement du TAC vis à vis du TAC obtenu selon l'art antérieur (en %) |
|---|---|---|
| 0 | >50 | / |
| 3 | 12 | 95-100 |
| 9 | 7 | 95 à 100 |
| 32 | 5 | 95 à 100 |

L'ajout de silicate selon la présente invention provoque systématiquement une précipitation de CaH₂SiO₄. Les précipités de ce composé, ayant l'apparence de flocs de 1 à 3 mm de diamètre, décantent au fond du saturateur, rendant l'eau de chaux limpide. La quantité de flocs est d'autant plus importante que le taux de silicate est important. Une telle floculation se substitue complètement aux troubles que provoquent les carbonates de calcium lorsqu'il n'y a pas ajout de composé silicate, c'est-à-dire lorsque l'on utilise pour la fabrication de l'eau des chaux ou de l'eau filtrée sur membrane ou de l'eau distillée. L'eau de chaux entre les flocs est tout à fait limpide dans le cas d'ajout de réactifs selon l'invention. Lorsque ces composés ne sont pas ajoutés, l'eau de chaux devient trouble et laiteuse et sa turbidité s'élève à environ 50 NTU.

Les mesures de TAC sur l'eau de chaux produite à partir d'eau ayant subi une nanofiltration ont donné des résultats systématiquement compris entre 210 °F et 230° F et ont toujours été du même ordre que ceux obtenus sur l'eau de chaux produite, selon l'état de l'art, à partir d'eau filtrée sur sable. Le taux de recouvrement calculé a toujours ainsi été de 95 à 100%.

On notera que le mode de réalisation de l'invention ici décrit n'a pas pour objectif de réduire la portée de celle-ci.

## Revendications

1. Procédé de fabrication d'eau de chaux comprenant une étape de mélange de lait de chaux avec une eau de dilution, dans un saturateur **caractérisé en ce que** ladite eau de dilution est une eau déionisée obtenue par filtration sur membrane ou par distillation, et/ou par un traitement sur résine échangeuse d'ions, et **en ce qu'**il comprend une étape consistant à ajouter des ions silicates à ladite eau déionisée.

2. Procédé selon la revendication 1 **caractérisé en ce que** ledit silicate est choisi dans le groupe constitué par le silicate de sodium et le silicate de potassium.

3. Procédé selon la revendication 2 **caractérisé en ce que** ledit silicate est le silicate de sodium.

4. Procédé selon l'une quelconque des revendications 1 à 3 **caractérisé en ce que** ladite eau déionisée par filtration membranaire est une eau ayant subi une nanofiltration ou une filtration par osmose inverse.

5. Procédé selon l'une quelconque des revendications 1 à 4 **caractérisé en ce que** ladite étape d'addition d'au moins un silicate est mise en oeuvre en mélangeant le silicate à ladite eau filtrée par filtration membranaire.

6. Procédé selon l'une quelconque des revendications 1 à 5, **caractérisé en ce que** ladite étape d'addition d'au moins un silicate à l'eau déionisée est mise en oeuvre en introduisant ledit silicate dans ledit saturateur.

7. Procédé selon l'une quelconque des revendications 1 à 6 **caractérisé en ce que** ledit silicate est ajouté à ladite eau déionisée à raison de 5 à 40 mg/l de SiO₂, préférentiellement 10 à 20 mg/l.

8. Utilisation d'une eau de chaux obtenue grâce au procédé selon l'une quelconque des revendications 1 à 7 dans le cadre d'un procédé de reminéralisation d'une eau à reminéraliser par addition d'eau de chaux et de gaz carbonique.

## Claims

1. A process for the production of lime water comprising a step of mixing milk of lime with a dilution water in a saturator, **characterised in that** said dilution water is a deionised water obtained by membrane filtration or by distillation and/or by ion exchange resin treatment and **in that** it comprises a step consisting of adding silicate ions to said deionised water.

2. The process according to claim 1, **characterised in that** said silicate is selected from the group consisting of sodium silicate and potassium silicate.

3. The process according to claim 2, **characterised in that** said silicate is sodium silicate.

4. The process according to any one of claims 1 to 3, **characterised in that** said water deionised by membrane filtration is a water that has been subjected to nanofiltration or filtration by reverse osmosis.

5. The process according to any one of claims 1 to 4, **characterised in that** said step of adding at least one silicate is carried out by mixing the silicate with said water that has been filtered by membrane filtration.

6. The process according to any one of claims 1 to 5, **characterised in that** said step of adding at least one silicate to the deionised water is carried out by introducing said silicate into said saturator.

7. The process according to any one of claims 1 to 6, **characterised in that** said silicate is added to said deionised water at a rate of 5 to 40 mg/l of SiO₂, preferably 10 to 20 mg/l.

8. Use of a lime water obtained by means of the process according to any one of claims 1 to 7 in the context of a process for the remineralisation of a water to be remineralised by adding lime water and carbon dioxide.

## Patentansprüche

1. Verfahren zur Herstellung von Kalkwasser, das einen Schritt aufweist, bei dem Kalkmilch mit Verdünnungswasser vermischt wird, wobei dieser Schritt in einem Sättiger erfolgt,
**dadurch gekennzeichnet ist, dass** es sich beim besagten Verdünnungswasser um deionisiertes Wasser handelt, das durch Filterung über eine Membran oder durch Destillation und/oder durch Behandlung über einen Ionentauscherharz erhalten wird und **dadurch**, dass es einen Schritt aufweist, der darin besteht, dem besagten deionisierten Wasser Silikationen beizumischen.

2. Verfahren nach Anspruch 1, **dadurch gekennzeichnet, dass** das besagte Silikat aus der durch Natriumsilikat und Kaliumsilikat gebildeten Gruppe gewählt wird.

3. Verfahren nach Anspruch 2, **dadurch gekennzeichnet, dass** es sich beim besagten Silikat um Natriumsilikat handelt.

4. Verfahren nach einem der Ansprüche 1 bis 3, **dadurch gekennzeichnet, dass** es sich beim besagten, durch Membranfilterung deionisierten Wasser um Wasser handelt, das einer Nanofilterung oder einer Filterung durch Umkehrosmose unterzogen wurde.

5. Verfahren nach einem der Ansprüche 1 bis 4, **dadurch gekennzeichnet, dass** der besagte Schritt, bei dem mindestens ein Silikat zugegeben wird, durch Beimischung des Silikats zum besagten durch Membranfilterung gefilterten Wassers erfolgt.

6. Verfahren nach einem der Ansprüche 1 bis 5, **dadurch gekennzeichnet, dass** der besagte Schritt, bei dem mindestens ein Silikat dem deionisierten Wasser zugegeben wird, durch Einfügen des besagten Silikats in den besagten Sättiger erfolgt.

7. Verfahren nach einem der Ansprüche 1 bis 6, **dadurch gekennzeichnet, dass** das besagte Silikat dem besagten deionisierten Wasser mit einer Rate von 5 bis 40 mg/l SiO₂ und vorzugsweise 10 bis 20 mg/l beigemischt wird.

8. Verwendung von Kalkwasser, das mit Hilfe des Verfahrens nach einem der Ansprüche 1 bis 7 erhalten wurde, im Rahmen eines Remineralisierungsverfahrens für Wasser, das durch Beimischung von Kalkwasser und Kohlensäure remineralisiert werden soll.
